# FASCICULE DE BREVET EUROPEEN

(11) **EP 0 549 452 B1**
(45) Date de publication et mention de la délivrance du brevet: **22.05.1996**
(21) Numéro de dépôt: 92403506.6
(22) Date de dépôt: 21.12.1992
(51) Int. Cl.: G01P 3/488, G01P 1/00

(54) **Couronne denteé pour un capteur magnétique de vitesse d'une roue**
Zahnrad für einen magnetischen Radgeschwindigkeitsmesssensor
Toothed wheel for a magnetic wheel speed sensor

(30) Priorité: 23.12.1991 FR 9116048
(43) Date de publication de la demande: 30.06.1993
(73) Titulaire: AUTOMOBILES PEUGEOT, F-75116 Paris (FR); AUTOMOBILES CITROEN, F-92200 Neuilly sur Seine (FR)
(72) Inventeur: Leroy, Philippe, F-25200 Montbeliard (FR)
(74) Mandataire: Durand, Yves Armand Louis

(56) Documents cités:
- EP-A- 0 213 732
- EP-A- 0 357 870
- EP-A- 0 420 041
- DE-A- 3 735 070
- US-A- 4 161 120

## Description

La présente invention a essentiellement pour objet une couronne dentée pour capteur magnétique de vitesse.

On sait que lorsqu'une roue de véhicule est équipée d'un système d'anti-blocage au freinage, il convient de détecter la vitesse de rotation de la roue.

Pour ce faire, on utilise généralement des capteurs magnétiques montés fixes sur chaque support de roue et qui utilisent l'information issue d'un champ magnétique qui varie avec la fréquence de passage des dents d'une couronne dentée solidaire de la roue du véhicule.

Cependant, en raison de la position des roues dans les passages de roue du véhicule, les couronnes dentées en question sont vulnérables aux projections de cailloux ou autres corps étrangers pouvant heurter accidentellement la denture de la couronne et même rester coincés entre deux dents. Dès lors, ces cailloux ou corps étrangers peuvent détériorer le capteur au cours de la rotation et par conséquent entraîner une défaillance du système anti-blocage de sécurité, généralement appelé système ABS.

On connaît d'après le document EP-A-213.732 une couronne dentée du type décrit dans le préambule de la revendication 1.

La présente invention a pour but de proposer une couronne dentée perfectionnée qui remédie aux inconvénients ci-dessus et évite avantageusement tout risque d'endommagement des capteurs magnétiques et de défaillance des systèmes anti-blocage de roue au freinage.

A cet effet, l'invention a pour objet une couronne dentée pour capteur magnétique de vitesse destiné en particulier à détecter la vitesse de rotation d'une roue de véhicule à laquelle est associé un système d'anti-blocage, et du type constitué par une couronne pouvant équiper ladite roue et comportant une denture extérieure périphérique, les creux entre les dents de la couronne étant remplis par des éléments de matière plastique amagnétique constituant des extensions, parallèles à l'axe de la couronne, à un anneau en matière plastique amagnétique, caractérisée en ce que l'anneau en matière plastique amagnétique entourant la couronne qui est métallique, et réalisant avec ses extensions et avec les sommets des dents de la couronne une surface périphérique cylindrique, est logé dans un décrochement de ladite couronne, lequel décrochement est juxtaposé à la denture de la couronne dans le sens axial.

Mais d'autres caractéristiques et avantages de l'invention apparaîtront mieux dans la description détaillée qui suit et se réfère aux dessins annexés, donnés uniquement à titre d'exemple, et dans lesquels.

La figure 1 est une vue extérieure et en plan d'une couronne dentée selon cette invention.

La figure 2 est une vue agrandie et en coupe de la partie fléchée II sur la figure 1, de cette couronne.

La figure 3 est une vue en coupe suivant la ligne III-III de la figure 1.

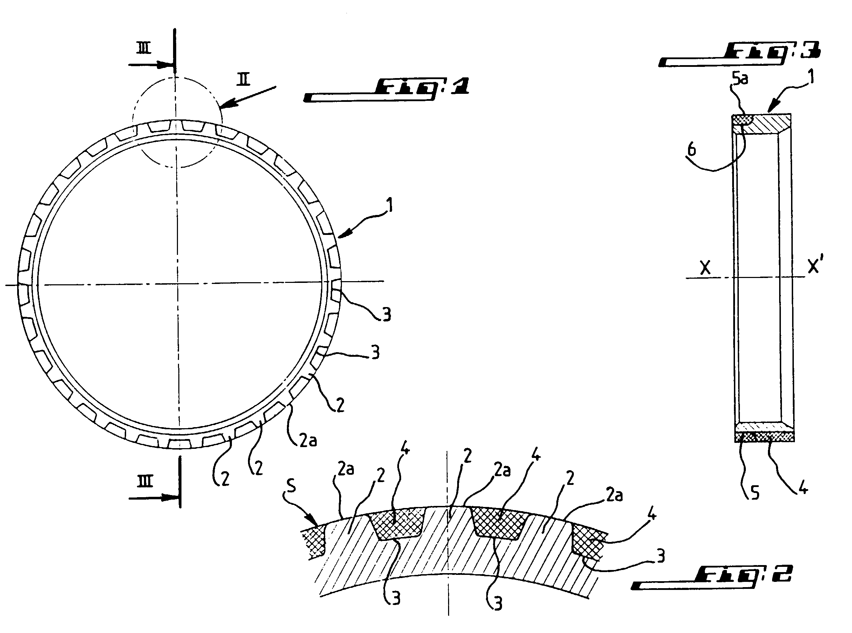

En se reportant notamment aux figures 1 et 3, on voit une couronne dentée, appelée parfois roue phonique, réalisée par exemple en acier, pouvant équiper une roue de véhicule (non représentée), et comportant une denture extérieure périphérique 1.

Conformément à l'invention, les dents 2 de la denture 1 définissent entre elles des creux 3 qui sont remplis d'un matériau amagnétique réalisant avec les sommets 2a des dents 2 une surface périphérique cylindrique S, comme on le voit bien sur la figure 2.

Une telle surface périphérique cylindrique S pourra être obtenue par usinage de la couronne après remplissage des creux 3 recevant le matériau amagnétique formant une pluralité d'éléments 4 logés dans lesdits creux entre les dents 2.

Les creux 3 sont de préférence remplis d'une matière plastique, telle que résine par exemple, qui peut être surmoulée sur la denture 1 de la couronne.

Comme il apparaît clairement sur la figure 3, les éléments 4 en matière plastique forment des extensions, parallèles à l'axe X-X' de la couronne, à un anneau 5, lui aussi en matière plastique entourant ladite couronne. La liaison des éléments en matière plastique 4 à l'anneau 5 permet d'obtenir une bonne cohésion entre les différents éléments en matière plastique 4.

On voit sur la figure 3 que l'anneau 5 est logé ou surmoulé dans un décrochement ou une rainure 6 juxtaposée à la denture 1 dans le sens axial. Ainsi, comme on le voit toujours sur la figure 3, la surface périphérique 5a de l'anneau 5 se trouve dans le prolongement de la surface cylindrique périphérique de la denture 1 à creux 3 remplis de matière plastique.

Après surmoulage de la matière plastique sur la surface périphérique de la couronne en acier, et qui remplit les creux 3 de même que le décrochement 6, la couronne pourra être usinée, comme évoqué précédemment, de façon à présenter une surface externe cylindrique parfaite, bien qu'un tel usinage ne soit pas obligatoire, la couronne, dans ce cas, sortant du moule directement à la cote.

On a donc réalisé suivant l'invention une couronne dentée perfectionnée très compacte, pouvant être fabriquée à partir des couronnes actuelles en acier, ne présentant aucune dent apparente et permettant d'assurer la non détérioration du capteur magnétique auquel elle est associée.

## Revendications

1. Couronne dentée pour capteur magnétique de vitesse destiné en particulier à détecter la vitesse de rotation d'une roue de véhicule à laquelle est associé un système d'anti-blocage, et du type constitué par une couronne pouvant équiper ladite roue et comportant une denture extérieure périphérique (1), les creux (3) entre les dents (2) de la couronne étant remplis par des éléments (4) de matière plastique amagnétique constituant des extensions, parallèles à l'axe (X-X') de la couronne, à un anneau (5) en matière plastique amagnétique, caractérisée en ce que l'anneau (5) en matière plastique amagnétique entourant la couronne qui est métallique, et réalisant avec ses extensions et avec les sommets (2a) des dents (2) de la couronne une surface périphérique cylindrique (S), est logé dans un décrochement (6) de ladite couronne, lequel décrochement est juxtaposé à la denture (1) de la couronne dans le sens axial.

2. Roue de véhicule équipée d'une couronne selon la revendication 1.

## Patentansprüche

1. Zahnkranz für einen magnetischen Messwertgeber, der insbesondere bestimmt ist, die Drehgeschwindigkeit eines Fahrzeugrades, dem ein blockierungsverhütendes System zugeordnet ist, zu ermitteln und derjenigen Gattung, die durch einen Kranz, der das besagte Rad ausrüsten kann, gebildet wird, und eine äussere Umfangsverzahnung (1) aufweist, wobei die Lücken (3) zwischen den Zähnen (2) des Kranzes mit Elementen (4) aus nichtmagnetischem Kunststoff ausgefüllt sind, die zur Achse (X-X') des Kranzes parallele Ausdehnungen bilden, mit einem Ring (5) aus nichtmagnetischem Kunststoff, dadurch gekennzeichnet, dass der den Kranz, der metallisch ist, umgebende Ring (5) aus nichtmagnetischem Kunsstoff und der mit seinen Ausdehnungen und mit den Spitzen (2a) der Zähne (2) des Kranzes eine zylindrische Umfangsfläche (S) bildet, in einem Absatz (6) des besagten Kranzes untergebracht ist, welcher Absatz an die Verzahnung (1) des Kranzes in der Axialrichtung angrenzt.

2. Mit einem Kranz gemäss Anspruch 1 ausgerüstetes Fahrzeugrad.

## Claims

1. Crown gear for magnetic speed sensor intended in particular to detect the speed of rotation of a vehicle wheel with which is associated an antiblocking system and of the type constituted by a ring which may fit the said wheel and comprising an external peripheral toothing (1), the hollows (3) between the teeth (2) of the ring being filled with elements (4) of non-magnetic plastics material constituting extensions parallel to the axis (X-X') of the crown, with a ring (5) of non-magnetic plastics material, characterized in that the ring (5) of non-magnetic plastics material surrounding the crown which is metallic and providing with its extensions and with the tips (2a) of the teeth (2) of the crown, a cylindrical peripheral surface (S), is accommodated in a rabbet (6) of the said crown, which rabbet is juxtaposed to the toothing (1) of the crown in the axial direction.

2. Vehicle wheel fitted with a crown according to claim 1.
